# EUROPEAN PATENT APPLICATION

(11) **EP 2 136 576 A2**
(43) Date of publication of application: **23.12.2009**
(21) Application number: 09006885.9
(22) Date of filing: 22.05.2009
(51) Int. Cl.: H04S 3/00

(54) **AV System**

(30) Priority: 23.05.2008 JP 2008135349; 13.04.2009 JP 2009096891
(71) Applicant: Yamaha Corporation, Hamamatsu-shi, Shizuoka 430-8650 (JP)
(72) Inventor: Matsumoto, Keishi, Hamamatsu-shi Shizuoka-ken 430-8650 (JP); Murata, Morihiro, Hamamatsu-shi Shizuoka-ken 430-8650 (JP)
(74) Representative: Wagner, Karl H.

(57) **Abstract**

AV content is input and output in an AV system. In the AV system, a plurality of AV devices process a signal of the content to reproduce the content. A source device broadcasts the content to each of the AV devices. In each of the AV devices, a reproduction unit receives the content broadcast by the source device and performs reproduction processing on the received content. A communication unit communicates reproduction processing time information with another AV device, the reproduction processing time information indicating a time required for the reproduction processing of the content. A delay unit delays a time to reproduce the content, such that the delay unit delays reproduction of the content in accordance with an AV device having a latest reproduction timing based on the reproduction processing time information.

## Description

### BACKGROUND OF THE INVENTION

### [Technical Field of the Invention]

The present invention relates to an AV system which reproduces content through a plurality of AV devices.

### [Description of the Related Art]

In conventional television devices, the amount of data of video (or image) signals is greater than that of audio (or sound) signals, and the signal processing of video signals is also more complicated than that of audio signals. Therefore, if a sound and an image are directly output immediately after they are processed, the sound is first output so that the sound and the image are not synchronized. Thus, in conventional television devices, the timing of emission of a sound through an internal speaker or an internal audio output terminal is delayed so that the sound is synchronized (i.e., lip-synced) with movement of lips (i.e., an image displayed on the monitor).

In a conventional AV system, when a DVD player reproduces content, a television receiver processes and displays a video signal of the content on an internal monitor while an AV amplifier processes and outputs an audio signal of the content through an external speaker (see Japanese Patent Application Publication No. 2006-33436). This AV system is designed assuming that the amount of data of video signals is greater than that of audio signals and the processing of video signals is also more complicated. In the AV system, the AV amplifier acquires processing time information of the video signal from the television receiver and performs delay processing of the audio signal according to the processing time information in order to prevent the occurrence of a lack of lip-sync.

However, in the conventional AV system, the timing of emission of the sound may lag behind the timing of display of the image. For example, let us consider the case where an AV amplifier is connected to a conventional television device, an image of a program received by this television device is displayed on a monitor, and a sound of the broadcast program is emitted through a speaker connected to the AV amplifier.

In this case, an audio signal is output through an internal audio output terminal so that the sound is lip-synced with the image displayed on the monitor. Therefore, if signal processing such as processing for imparting acoustic effects is performed on the audio signal in the AV amplifier, the timing of emission of the sound is delayed by the time required for the signal processing, thereby causing a lack of lip-sync.

In addition, a recent television device has a game mode which avoids the lack of synchronization of the video and the timing of depression of a button on a game console. The game mode considerably simplifies image processing, thereby advancing the timing of display of the image. If the AV amplifier has been set to impart acoustic effects to the sound when the game mode is selected, the reproduction of a sound of the content lags behind an image of the content, thereby causing a lack of lip-sync.

In addition, in the case where content is broadcast from a source device such as a DVD player to a subwoofer and an AV amplifier connected to a speaker, there is a problem in that the processing times for audio reproduction at the AV amplifier and the subwoofer are different so that sounds are reproduced at different timings. The difference between the audio reproduction processing times is further increased in the case where acoustic effects such as reverberation for reproducing concert hall acoustics or the like are imparted to the sound. Therefore, a (bass) sound emitted by the subwoofer arrives at a listening position earlier than a sound emitted by the speaker connected to the AV amplifier.

As described above, the conventional AV system has a problem in that the timings of reproduction of content by AV devices are not synchronized.

### SUMMARY OF THE INVENTION

Therefore, it is an object of the invention to provide an AV system that can correct the timings of reproduction of content by AV devices to eliminate the lack of synchronization between the reproduction timings.

The invention provides an AV system having the following configurations as means for solving the above problems.

(1) The invention provides an AV system including a source device that broadcasts content to AV devices. Each AV device receives content broadcast by the source device and performs reproduction processing on the content. In the AV device, a communication unit communicates reproduction processing time information, which is information regarding reproduction processing of content, with another AV device and a delay unit delays reproduction of content in accordance with an AV device having a latest reproduction timing based on the reproduction processing time information.

In the case where content is transmitted from the source device to a plurality of AV devices through broadcasting when the AV system has the configuration of (1), information regarding reproduction processing of content is communicated between the AV devices. Each AV device then delays reproduction of content in accordance with an AV device having a latest reproduction timing. Accordingly, in such a case where the same content is reproduced through a plurality of AV devices, the content can be reproduced without causing a lack of lip-sync between AV devices.

(2) In the AV system of the invention, the communication unit of one AV unit transmits information instructing delay of reproduction of the content based on the reproduction processing time information to another AV device requiring a time for reproduction processing shorter than a time required for reproduction processing by the one AV device. Thus, a first AV device requiring a short time for reproduction processing only needs to have a configuration for receiving information instructing delay of reproduction of content from a second AV device and then delaying the reproduction of the content. This eliminates the need to adjust content reproduction timing with that of the second AV device, thereby simplifying the configuration.

(3) In the AV system of the invention, at least one of the AV devices comprises a speaker array that comprises a plurality of speakers, and a beam control unit that distributes audio signals of the content to the plurality of the speakers of the speaker array for emission of sounds in beam forms which constitute sound channels and that adjusts sound emission timing of each sound channel to allow the plurality of the sounds to simultaneously arrive at a listening position. The time required for reproduction processing by the AV device includes a time required for the sound to arrive at the listening position.

Since the speaker array emits each sound beam so that the sound beam arrives at the listening position after being reflected at walls multiple times, the propagation time of the sound beam during which the sound beam propagates until it arrives at the listening position after being emitted is longer than that of other general speakers. When the AV system has the configuration of (3), reproduction of an image is delayed, also taking into consideration the propagation time of the sound beam, in the case where the speaker array is used as an audio reproduction device, and therefore it is possible to reliably synchronize the image reproduced by the video reproduction device with the sound reproduced by the audio reproduction device and thus to prevent the occurrence of a lack of lip-sync.

(4) In the AV system of the invention, the delay unit changes an amount of delay of reproduction of content according to whether the content has been received from the source device directly or via another AV device.

We can consider that, when the AV device receives content through one of a plurality of routes, the timing of reception of the content may vary depending on the route. When the AV system has the configuration of (4), reproduction of content is delayed according to the route of reception of the content, and therefore it is possible to reliably synchronize the image reproduced by the video reproduction device with the sound reproduced by the audio reproduction device no matter which route the content is received through.

(5) The invention also provides an AV system including a video reproduction device that reproduces an image of content and delays an audio signal of the content in accordance with the timing of reproduction of the video using a delay unit and transmits the delayed audio signal, and also including an audio reproduction device that receives the audio signal of the content from the video reproduction device and then reproduces a sound. The video reproduction device outputs the audio signal of the content after delaying the audio signal in accordance with the timing of reproduction of the video, for example because the time required for image processing is longer than the time required for sound processing. Since the audio reproduction device performs processing on the audio signal output by the video reproduction device, reproduction of the audio becomes late by the time required for the processing. Thus, the audio reproduction device transmits information of the sound processing time required for the processing of the audio signal of the content to the video reproduction device through a second communication unit. The video reproduction device reduces the delay time of the audio signal based on information regarding the audio reproduction processing received from the audio reproduction device. By performing the processing in this manner, it is possible to synchronize the image reproduced by the video reproduction device with the sound reproduced by the audio reproduction device, thereby accomplishing lip-sync.

(6) In the AV system of the invention, when the time required for reproduction processing of a sound is longer than the time required for reproduction processing of an image, the delay unit delays the reproduction timing of the image by the difference between the sum of sound processing times and the image processing time.

When acoustic effects are imparted to an audio signal or when the speed of video reproduction processing is high as in a game mode, the timing of reproduction of the audio reproduced by the audio reproduction device may lag behind the timing of reproduction of the video by the video reproduction device. When the AV system has the configuration of (6), the delay unit of the video reproduction device delays the reproduction timing of the image by the difference between the sum of sound processing times and the image processing time, and therefore it is possible to synchronize the image reproduced by the video reproduction device with the sound reproduced by the audio reproduction device, thereby accomplishing lip-sync.

(7) In the AV system of the invention, the audio reproduction device includes a speaker array that comprises a plurality of speakers, and a beam control unit that distributes audio signals of the content to the plurality of the speakers of the speaker array for emission of sounds in beam forms which constitute sound channels and that adjusts sound emission timing of each sound channel to allow the plurality of the sounds to simultaneously arrive at a listening position, wherein the sound processing time of the audio reproduction device includes a time required for the sound to arrive at the listening position.

Since the speaker array emits each sound beam so that the sound beam arrives at the listening position after being reflected at walls multiple times, the propagation time of the sound beam during which the sound beam propagates until it arrives at the listening position after being emitted is longer than that of other general speakers. When the AV system has the configuration of (7), reproduction of an image is delayed, also taking into consideration the propagation time of the sound beam, in the case where the speaker array is used as an audio reproduction device, and therefore it is possible to reliably synchronize the image reproduced by the video reproduction device with the sound reproduced by the audio reproduction device.

(8) In the AV system of the invention, the beam control unit of the audio reproduction device has a plurality of beam modes selectable for changing positions at which the plurality of the sounds each having the beam form are reflected from walls enclosing the receiving point and changes the sound processing time according to a beam mode selected in the audio reproduction device.

In the case where the speaker array has a plurality of beam modes for changing positions, at which sound beams are reflected from walls, according to installation location, the propagation time of the sound beam that elapses until the sound beam arrives at the listening position after being emitted varies depending on the beam mode. When the AV system has the configuration of (8), it is possible to synchronize the image with the sound no matter which beam mode is selected since the image processing time is delayed taking into consideration that the propagation time varies depending on the beam mode.

In the AV system of the invention, each AV device transmits and receives information regarding the reproduction timing of content and delays reproduction of content in accordance with an AV device having a latest reproduction timing based on information communicated with other AV devices, thereby enabling synchronization of reproduction of content. Accordingly, it is possible to reproduce content without causing a lack of lip-sync or causing a lack of synchronization of reproduction of surround sound and bass sound.

### BRIEF DESCRIPTION OF THE DRAWINGS

FIG. 1 is a block diagram illustrating a schematic configuration of an AV system according to a first embodiment of the invention.
FIGS. 2A to 2C illustrate the state and the processing and propagation times of each sound beam output by a speaker array device.
FIGS. 3A to 3E are timing charts of video processing and audio processing in an AV system associated with the first embodiment of the invention.
FIG. 4 is a flow chart illustrating the processing operation of the AV system.
FIG. 5 is a block diagram illustrating a schematic configuration of an AV system associated with a second embodiment of the invention.
FIG. 6 is a block diagram illustrating a schematic configuration of an AV system associated with a third embodiment of the invention.
FIG. 7 is a timing chart of image processing and sound processing in the AV system.
FIGS. 8A to 8C illustrate a table for managing the processing time of the video signal or the audio signal according to image resolution, sound field processing mode, or the like.
FIGS. 9A and 9B illustrate a schematic configuration of a conventional AV system and a relation between processing times.
FIG. 10 is a block diagram illustrating a schematic configuration of an AV system associated with a fourth embodiment of the invention.
FIG. 11 illustrates a relation between processing times in the AV system associated with the fourth embodiment of the invention.
FIGS. 12A and 12B are a conceptual diagram illustrating another AV system configuration according to the invention.
FIGS. 13A and 13B are a conceptual diagram illustrating another AV system configuration according to the invention.

### DETAILED DESCRIPTION OF THE INVENTION

### [First Embodiment]

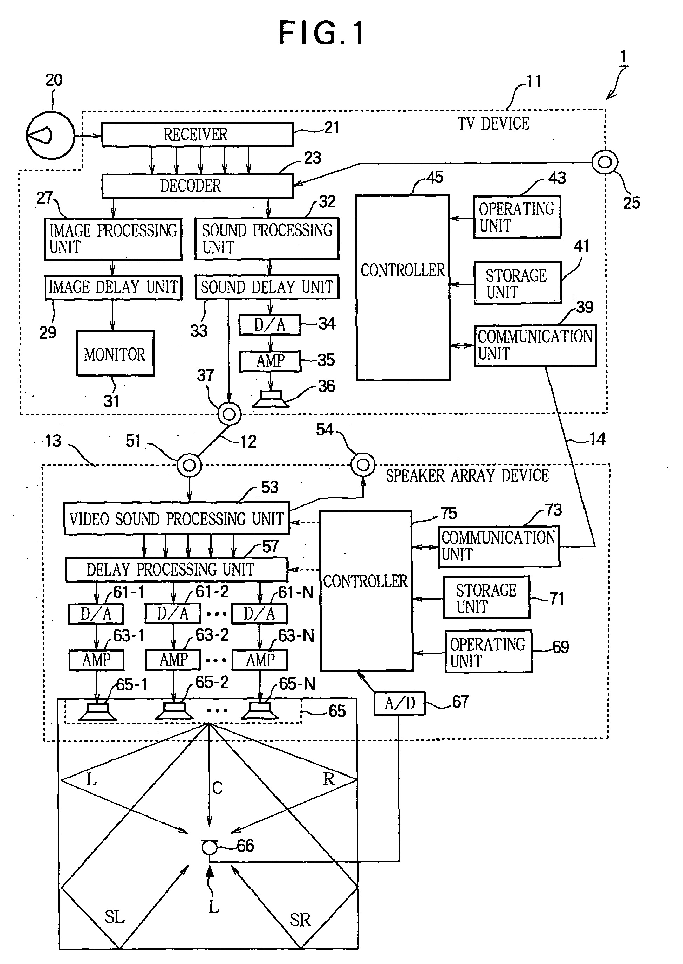

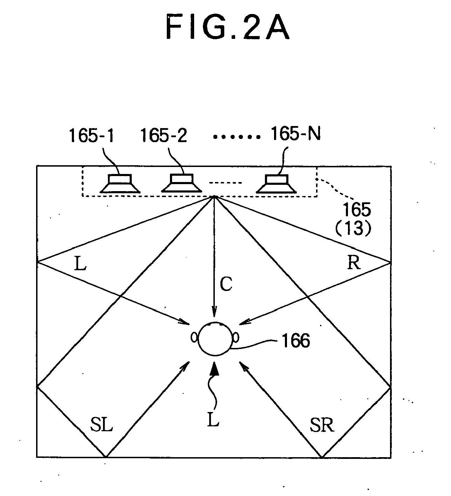

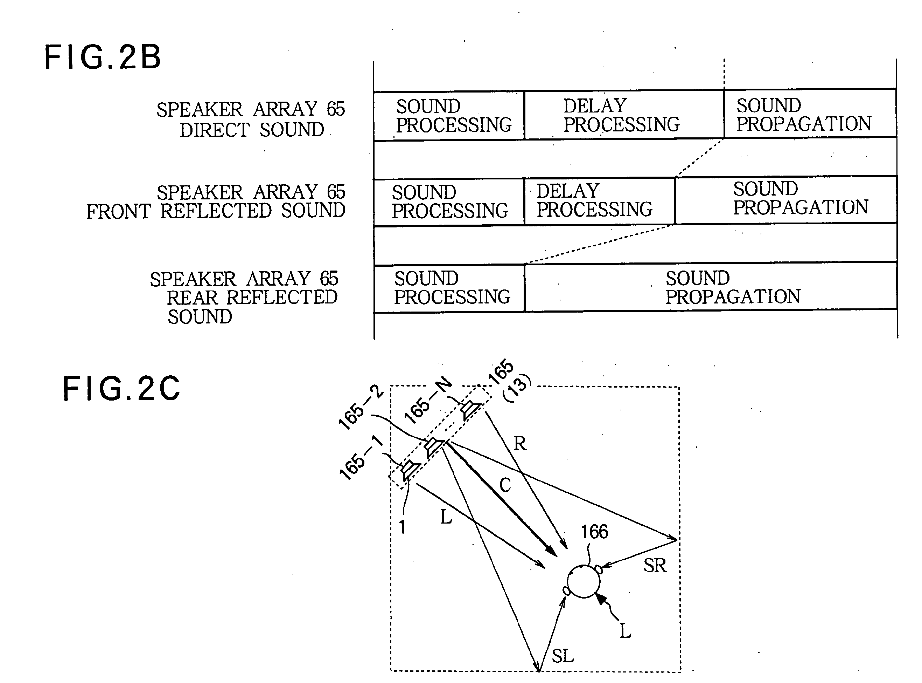

FIG. 1 is a block diagram illustrating a schematic configuration of an AV system according to a first embodiment of the invention. FIG. 2 illustrates the state and the processing and propagation times of each sound beam output by a speaker array device.

The AV system 1 according to the first embodiment is a 5ch surround system that includes two AV devices, i.e., a speaker array device 13 having both AV amplifier and speaker functions and a television device 11. In the AV system 1, the television device 11 receives a broadcast and a monitor 31 of the television device 11 displays an image of the broadcast and the speaker array device 13 emits a sound of the broadcast.

In the following description, a front left channel in the 5ch surround system is referred to as "Left (L) ch", a front right channel is referred to as "Right (R) ch", a center channel is referred to as "Center (C) ch", a rear left channel is referred to as "Surround Left (SL) ch", and a rear right channel is referred to as "Surround Right (SR) ch".

The television device 11 corresponds to a video reproduction device and includes a receiver 21, a decoder 23, a signal input unit 25, an image processing unit 27, an image delay unit 29, a monitor (or display unit) 31, a sound processing unit 32, a sound delay unit 33, a D/A converter 34, a power amplifier 35, a speaker 36, a sound output unit 37, a communication unit 39, a storage unit 41, an operating unit 43, and a controller 45.

The receiver 21 extracts a signal of a broadcast (content) of a frequency (physical channel) selected by a user from a radio wave received through an antenna 20 and outputs the extracted signal.

The decoder 23 performs decoding, as signal processing, on the broadcast signal to extract a video signal and an audio signal. The decoder 23 then outputs the video signal to the image processing unit 27 and outputs the audio signal to the sound processing unit 32.

The signal input unit 25 is an interface that receives an input of a video signal or an audio signal from the outside.

The image processing unit 27 corresponds to an image processing unit and performs a variety of video signal processing (for example, video reproduction processing) such as signal processing associated with brightness and contrast adjustment and outputs a generated RGB video signal to the image delay unit 29.

The image delay unit 29 outputs the RGB video signal to the monitor 31 after delaying the output of the RGB video signal by a time indicated by the controller 45.

The monitor (i.e., display unit) 31 corresponds to a display unit and displays an image based on the RGB video signal received from the image delay unit 29.

The sound processing unit 32 corresponds to a first sound processing unit and performs audio signal processing (for example, audio reproduction processing) such as decompression of a compressed audio signal or impartment of audio effects to a sound emitted by the speaker 36 and outputs the resulting signal to the sound delay unit 33.

The sound delay unit 33 corresponds to a delay unit and outputs the audio signal to the speaker 36 and the sound output unit 37 after delaying the output of the audio signal by a time indicated by the controller 45.

The D/A converter 34 converts the digital audio signal output from the sound delay unit 33 into an analog audio signal and outputs the analog audio signal.

The power amplifier 35 amplifies and outputs the analog audio signal output from the D/A converter 34.

The speaker 36 emits a sound based on the audio signal provided from the power amplifier 35.

The sound output unit 37 is an interface for outputting the audio signal provided from the sound delay unit 33 from the television device 11.

The communication unit 39 corresponds to a first communication unit and transmits and receives control information (such as information regarding the reproduction timing of content) to and from the speaker array device 13.

The storage unit 41 stores information such as information of the time required for the television device 11 to perform image processing or sound processing.

The operating unit 43 is a user interface that receives an operation performed by the user.

The controller 45 controls each element of the television device 11 or performs calculation.

The speaker array device 13 corresponds to an audio reproduction device and includes a signal input unit 51, a video sound processing unit 53, a signal output unit 54, a delay processing unit 57, D/A converters 61-1 to 61-N, power amplifiers 63-1 to 63-N, a speaker array 65 including speaker units 65-1 to 65-N, an A/D converter 67, an operating unit 69, a storage unit 71, a communication unit 73, and a controller 75.

The signal input unit 51 is an interface that receives an input of an audio signal or a video signal from the outside. The signal input unit 51 outputs the input signal to the video sound processing unit 53.

The video sound processing unit 53 corresponds to a second sound processing unit and performs processing, such as decoding or encoding or impartment of acoustic effects selected by the user, on the input audio signal and outputs the processed signal to the delay processing unit 57.

The signal output unit 54 is an interface that outputs a video signal to an externally connected device.

The delay processing unlit 57 delays the output of the audio signal by a time indicated by the controller 75 so that the image displayed on the monitor 31 is lip-synched with the sound output from the speaker array 65.

The length of a path, along which each of a plurality of sound beams output from the speaker array 65 propagates until it arrives at a listening position L of the user, varies depending on the sound channel. For example, as shown in FIG. 2A, the path length of a sound beam of a center channel (Cch) is shortest since the sound beam arrives directly at (or propagates directly to) the listening position L. A sound beam of each of the front channels Lch and Rch arrives at the listening position L after being reflected at a wall of a room once. The path length of a sound beam of each of the rear channels SLch and SRch is longest since the sound beam arrives at the listening position L after being reflected at walls of the room twice. Therefore, the delay processing unit 57 sets a delay time for each channel and adjusts the timings of output of the plurality of sound beams from the speaker array 65 so that the output sound beams arrive at the listening position at the same time. The delay processing unit 57 also corresponds to a beam control unit and distributes a sound to each channel (or each speaker unit) so that a plurality of sound beams is output through the speaker array 65, and adjusts the respective sound emission timings of the speaker units to output the plurality of sound beams. That is, since the propagation distance of the sound beam increases sequentially in the named order of the center channel Cch (i.e., the direct sound), the front channels (i.e., the front reflected sound), and the rear channels (i.e., rear reflected sounds), the delay processing unit 57 shortens the delay processing time increasingly in the same order so that the sound beam of each channel arrives at the listening position at the same time as shown in FIG. 2B.

In addition, in the speaker array device 13, a preferred beam mode can be selected from a plurality of beam modes according to the arrangement of the speaker array 65 or a selection made by the user. For example, in the case where the speaker array 65 is installed at a corner of the room, the speaker array device 13 emits a sound beam of the center channel (Cch) and sound beams of the front channels (Lch and Rch) so that they arrive directly at the listening position L as shown in FIG. 2C. In addition, the speaker array device 13 emits sound beams of the rear channels (SLch and SRch) so that they arrive at the listening position L after being reflected at a wall of the room once.

The number of reflections of a sound beam or the arrangement of the speaker array device 13 is different in each of the beam mode shown in FIG. 2A and the beam mode shown in FIG. 2C, and the path length of the sound beam is also different in each beam mode. Although not illustrated, the path length of a sound beam when another beam mode is selected in the speaker array device 13 is also different from those of the beam modes shown in FIG. 2A and FIG. 2C.

The speaker array device 13 performs delay processing on a sound beam as described above. Accordingly, if the speaker array device 13 described above is connected to the television device 11 that is designed such that the internal sound output unit 37 outputs an audio signal so as to be lip-synced with an image displayed on the monitor 31, reproduction of the audio lags behind display of the image of the content, thereby causing a lack of lip-sync.

Therefore, the invention coincides the output timing of the image with the arrival timing of the sound beam to prevent the occurrence of a lack of lip-sync.

In addition, a microphone 66 for receiving sounds is installed at the listening position of the user and the speaker array device 13 emits a test sound through the speaker array 65 and measures the distance between the speaker array 65 and the listening position or determines an optimal reflecting position of a sound beam of each channel using a known method. The speaker array device 13 also determines the emission timing of a sound beam of each channel based on information of the propagation distance or the sound propagation time of the sound beam of each channel. Here, the sound propagation time is the length of time which elapses until the sound beam is received by the microphone after being emitted.

As shown in, FIG. 1, the D/A converters 61-1 to 61-N convert digital audio signals output from the delay processing unit 57 into analog audio signals and output the analog audio signals.

The power amplifiers 63-1 to 63-N amplify and output the analog audio signals output from the D/A converters 61-1 to 61-N.

The speaker array 65 corresponds to a sound emission unit and includes speaker units 65-1 to 65-N that are disposed on a single panel in a predetermined array such as a matrix array, a line array, or a honeycomb array. The speaker units 65-1 to 65-N convert the audio signals amplified by the power amplifiers 63-1 to 63-N into sounds and emit the sounds.

The A/D converter 67 converts a test analog sound received by the microphone 66 into a digital sound and outputs the digital sound to the controller 75.

The operating unit 69 receives an operation such as a setting operation that the user performs on the speaker array device 13 and outputs a signal corresponding to the operation to the controller 45.

The storage unit 71 stores a setting pattern or the like of the speaker units. The controller 75 reads data according to the operation received through the operating unit 69. The storage unit 71 also stores information of a time required for reproduction processing of sounds. That is, the storage unit 71 stores sound processing time information or reproduction processing time information such as information of the time required for the delay processing of a sound beam or information of the time during which the sound propagates to the listening position.

The communication unit 73 corresponds to a second communication unit and transmits and receives control information to and from the television device 11.

The controller 75 controls each element of the speaker array device 13 or performs calculation.

The sound output unit 37 of the television device 11 is connected to the signal input unit 51 of the speaker array device 13 through a cable 12. The communication unit 39 of the television device 11 is connected to the communication unit 73 of the speaker array device 13 through a cable 14.

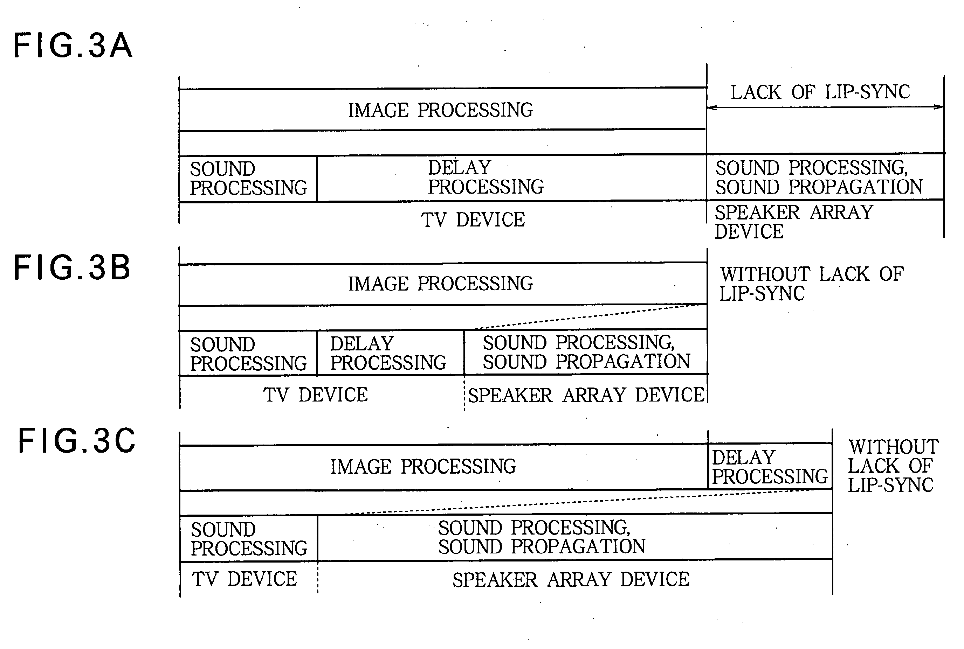

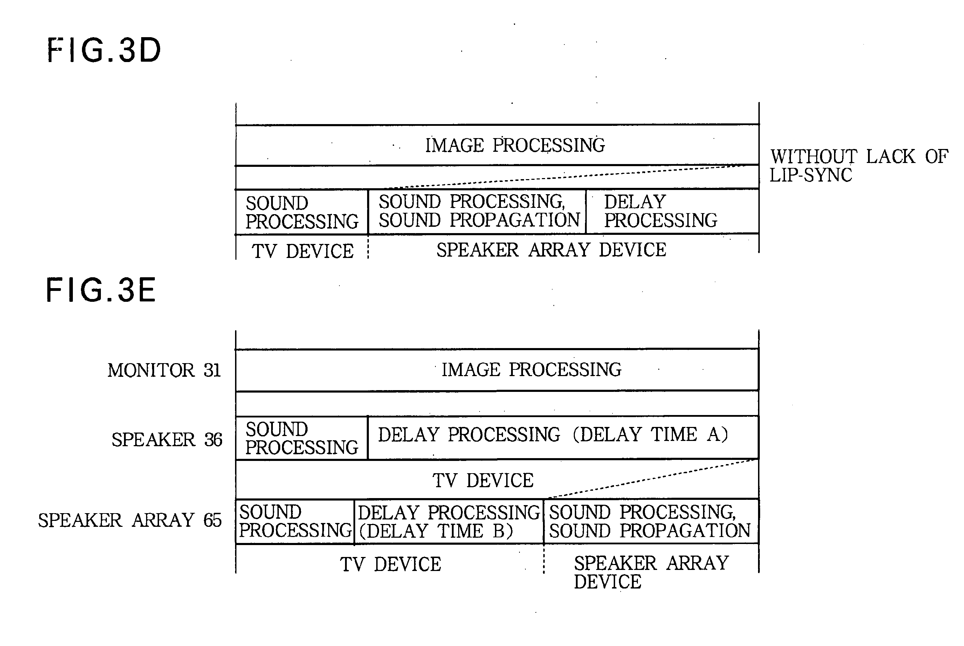

FIGS. 3A to 3E are timing charts of video processing and audio processing in an AV system associated with the first embodiment of the invention. FIG. 3A is a timing chart of a conventional AV system and FIGS. 3B, 3C, 3D, and 3E are timing charts of the invention.

As described above, the conventional television device delays the output of the audio signal from the internal audio output terminal so that the display of the image on the internal monitor coincides with (i.e., is lip-synced with) the output of the audio signal. Therefore, when acoustic effects are imparted to the audio signal through the AV amplifier or the speaker array device, there is a problem in that emission of the sound lags behind (i.e., is out of lip-sync with) display of the image by a time required to perform signal processing for imparting acoustic effects as shown in FIG. 3A.

Therefore, in the AV system 1 of the invention, the speaker array device (AV amplifier) 13 notifies the counterpart (i.e., the device connected thereto) of information (such as the amount of delay) of a time required to process the audio signal (i.e., an audio processing time) or the television device 11 notifies the counterpart (i.e., the device connected thereto) of information (such as the amount of delay) of a time required to process the video signal (i.e., a video processing time) or of information (such as the amount of delay) of a time required to process the audio signal (i.e., an audio processing time) so as to adjust the delay time of the audio signal or the video signal in the television device 11. This enables the timing of display of the image on the monitor 31 of the television device 11 to coincide with the timing of arrival of a sound beam output from the speaker array 65 of the speaker array device 13 at the listening position.

As described above, the speaker array device 13 adjusts the time for each sound to arrive at the listening position so that the sound beam of each channel simultaneously arrives at the listening position. Therefore, in the following description, it is assumed that the audio processing time of the speaker array device 13 includes the time required for the sound to arrive at the listening position (i.e., the sound propagation time).

First, the AV system 1 is configured such that the speaker array device 13 notifies the television device 11 of information (such as the amount of delay) regarding a time required for the speaker array device 13 to process the audio signal. For example, this information is set as a header command so that the speaker array device 13 notifies the television device 11 of the information through CEC of HDMI^{™}. The notification of such information may also be performed using a connection line such as RS-232C, through which information can be transmitted from the speaker array device 13 to the television device 11, without being limited to HDMI^{™}.

When (the processing time of the audio signal at the television device 11) + (the sum of the processing time and the sound propagation time of the audio signal at the speaker array device 13) < (the processing time of the video signal at the television device 11), the controller 45 of the television device 11 sets the delay time of the audio signal at the television device 11 in the sound delay unit 33 so that (the processing time of the audio signal at the television device 11) + (the delay time of the audio signal at the television device 11) + (the sum of the processing time and the sound propagation time of the audio signal at the speaker array device 13) = (the processing time of the video signal at the television device 11) as shown in FIG. 3B. That is, the controller 45 performs processing for reducing the amount of delay of the audio signal (i.e., a time by which the audio signal is delayed) at the television device 11.

In addition, when (the processing time of the audio signal at the television device 11) + (the sum of the processing time and the sound propagation time of the audio signal at the speaker array device 13) > (the processing time of the video signal at the television device 11), the controller 45 of the television device 11 delays the timing of reproduction of the video by the difference between the sum of the sound processing times and the image processing time as shown in FIG. 3C. Specifically, the controller 45 sets the delay time of the video signal at the television device 11 in the image delay unit 29 so that (the processing time of the audio signal at the television device 11) + (the sum of the processing time and the sound propagation time of the audio signal at the speaker array device 13) = (the processing time of the video signal at the television device 11) + (the delay time of the video signal at the television device 11). That is, the controller 45 performs processing for delaying the video signal in the television device 11.

Although the processing time of the audio signal is generally shorter than the processing time of the video signal, the processing time of the audio signal is longer than the processing time of the video signal when the delay processing is performed so that a plurality of sound beams from the speaker array device simultaneously arrive at (or propagates to) the listening position L or when the game mode is selected at the television device 11.

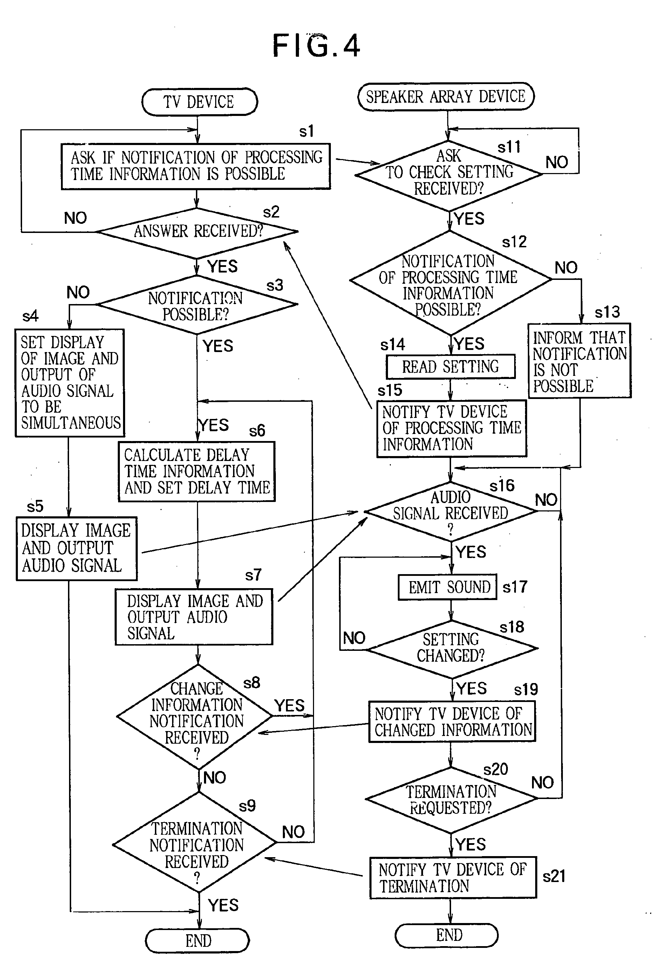

In this case, the television device 11 and the speaker array device 13 are operated in the following manner. FIG. 4 is a flow chart illustrating the processing operation of the AV system. Here, it is assumed that the communication unit 39 of the television device 11 and the communication unit 73 of the speaker array device 13 are connected through CEC of HDMI^{™}.

The controller 45 asks the speaker array device 13 whether or not the speaker array device 13 can provide the notification of audio signal processing time information through the communication unit (s1).

The controller 75 of the speaker array device 13 waits until the ask is received from the television device 11 (s11: N). If the speaker array device 13 has no function to provide the notification of audio signal processing time information and thus cannot provide the notification, the controller 75 notifies the television device 11 of that fact (s13) when the ask has been received from the television device 11 (s11: Y). The controller 75 of the speaker array device 13 then waits until an audio signal is input to the speaker array device 13 (s16: N).

The controller 45 of the television device 11 waits until an answer is received from the speaker array device 13 (s2: N). When an answer is received from the speaker array device 13 (s2: Y), the controller 45 sets the timing of display of the image and the timing of output of the sound to coincide with each other if the speaker array device 13 has no function to provide notification of audio signal processing time information (s4). Then, the controller 45 receives a broadcast signal of a channel selected by the user and outputs an audio signal of the broadcast signal to the speaker array device 13 and displays an image thereof on the monitor (s5).

When the audio signal is input to the speaker array device 13 (s16: Y), the controller 75 of the speaker array device 13 emits the sound (s17).

On the other hand, the controller 75 of the speaker array device 13 performs the following procedure if the speaker array device 13 has the function to provide notification of audio signal processing time information and thus can provide the notification (s12: Y). That is, the controller 75 reads currently set processing time information of the audio signal from the storage unit 71 (s14). The controller 75 then notifies the television device 11 of both information indicating that the speaker array device 13 can provide notification of the audio signal processing time information and the processing time information of the audio signal through the communication unit 73 (s15).

The controller 45 of the television device 11 performs the following procedure if an answer is received from the speaker array device 13 (s2: Y) and the speaker array device 13 has the function to provide notification of audio signal processing time information (s3: Y). That is, the controller 45 calculates reproduction processing time information so that the timing of display of the image at the television device 11 and the timing of arrival of the sound beam output from the speaker array device 13 at the listening position coincide with each other. The controller 45 then sets a delay time in the image delay unit 29 or the sound delay unit 33 (s6) (see FIGS. 3B and 3C).

The controller 45 of the television device 11 receives the broadcast signal of the channel selected by the user and outputs an audio signal of the broadcast signal to the speaker array device 13 and displays an image thereof on the monitor (s7).

The controller 75 of the speaker array device 13 emits a sound (s16: Y) if the audio signal is input to the speaker array device 13 (s17).

When the controller 75 of the speaker array device 13 has detected that the user has operated the operating unit 69 to change the setting of acoustic effects, the number of sound beams, or the listening position (s18: Y), the controller 75 notifies the television device 11 of a processing time change through this operation (s19).

When the controller 45 of the television device 11 has detected the notification of the change of the processing time from the speaker array device 13 (s8: Y), the controller 45 performs the process of step s6.

When the controller 75 of the speaker array device 13 has detected that the user has operated the operating unit 69 to set the power to be off (i.e., the procedure to be terminated) (s20: Y), the controller 75 notifies the television device 11 of that fact (s21) and terminates the procedure.

When the controller 45 of the speaker array device 13 has detected the notification of the setting of the procedure to be terminated from the speaker array device 13 (s9), the controller 45 terminates the procedure.

On the other hand, the AV system 1 may also be configured such that the television device 11 notifies the speaker array device 13 of the time required for processing of the video signal and the time required for processing of the audio signal. The AV system 1 may also be configured such that the speaker array device 13 reads information such as EDID recorded in the storage unit 41 of the television device 11. In this case, the AV system 1 is configured such that the television device 11 outputs the audio signal without delaying the output of the audio signal and the speaker array device 13 delays the timing of output of the audio signal (see FIG. 3D). That is, the AV system 1 performs processing for increasing the delay time of the audio signal at the speaker array device 13. In addition, transmission and reception of information such as EDID may be set to be performed through a header command of CEC of HDMI^{™}. Further, the notification of such information may also be performed using a connection line such as RS-232C, through which information can be transmitted from the speaker array device 13 to the television device 11, without being limited to HDMI^{™}.

The AV system 1 shown in FIG. 1 may also be configured such that an image of the content of a broadcast received by the television device 11 is displayed on the monitor 31 and a sound of the content is emitted through both the speaker 36 and the speaker array 65. For example, this configuration is suitable for the case where a viewer A in a living room listens to a sound from the speaker 36 included in the television device 11 while viewing the monitor 31 and a viewer B in a kitchen adjacent to the living room listens to a sound (i.e., a beam sound) from the speaker array 65 installed in the living room.

When the AV system 1 has this configuration, there is a need to adjust the image displayed on the monitor 31 and the sound emitted from the speaker 36 so as to be lip-synced (i.e., synchronized) with each other. The viewer B hears not only the sound from the speaker array 65 but also the sound from the speaker 36. Therefore, it is necessary to synchronize the sound emitted from the speaker array 65 with the sound emitted from the speaker 36.

Therefore, the sound delay unit 33 of the television device 11 delays each of the audio signal, which is output to the D/A converter 34 to be emitted through the speaker 36, and the audio signal, which is output to the sound output unit 37, to synchronize each sound with the image as described above.

Specifically, as shown in FIG. 3E, the controller 45 of the television device 11 sets a delay time (i.e., the amount of delay) A in the sound delay unit 33 to allow the sound delay unit 33 to perform delay processing on the audio signal and output the delayed audio signal to the speaker 36 so that the speaker 36 emits the sound at the same time as when the monitor 31 displays the image. The controller 45 also sets a delay time (i.e., the amount of delay) B in the sound delay unit 33 to allow the sound delay unit 33 to perform delay processing on the audio signal and output the delayed audio signal through the sound output unit 37 so that the sound from the speaker array 65 and the sound from the speaker 36 are simultaneously heard at the listening position L of the viewer B, i.e., so that the speaker 36 and the speaker array 65 simultaneously emit the sounds.

Although each of the above embodiments described with reference to FIG. 3 has been exemplified by the case where the AV system 1 is configured such that the television device 11 receives a broadcast and reproduces content, the AV system may have a different configuration, without being limited to this configuration. For example, the AV system 1 may also be configured such that a device such as a DVD player or a video reproduction device is connected to the signal input unit and image and audio signals of content reproduced by the device are input to the television device 11 through the signal input unit 25.

As described above with reference to FIG. 2, the sound processing time of the speaker array device 13 (such as the time required for the video sound processing unit 53 or the delay processing unit 57 to process the audio signal or the time that elapses until the sound emitted from the speaker array 65 arrives at the listening position) varies according to the position of installation of the speaker array device 13 or the beam mode set in the speaker array device 13. Therefore, the speaker array device 13 is configured such that sound processing times according to beam modes are previously stored in the storage unit 71. The speaker array device 13 is also configured so as to transmit and receive information of the sound processing time according to the set beam mode to and from the television device 11. Accordingly, it is possible to reliably synchronize the image displayed on the monitor 31 of the television device 11 with the sound emitted from the speaker array 65 no matter which beam mode is set in the speaker array device 13.

### [Second Embodiment]

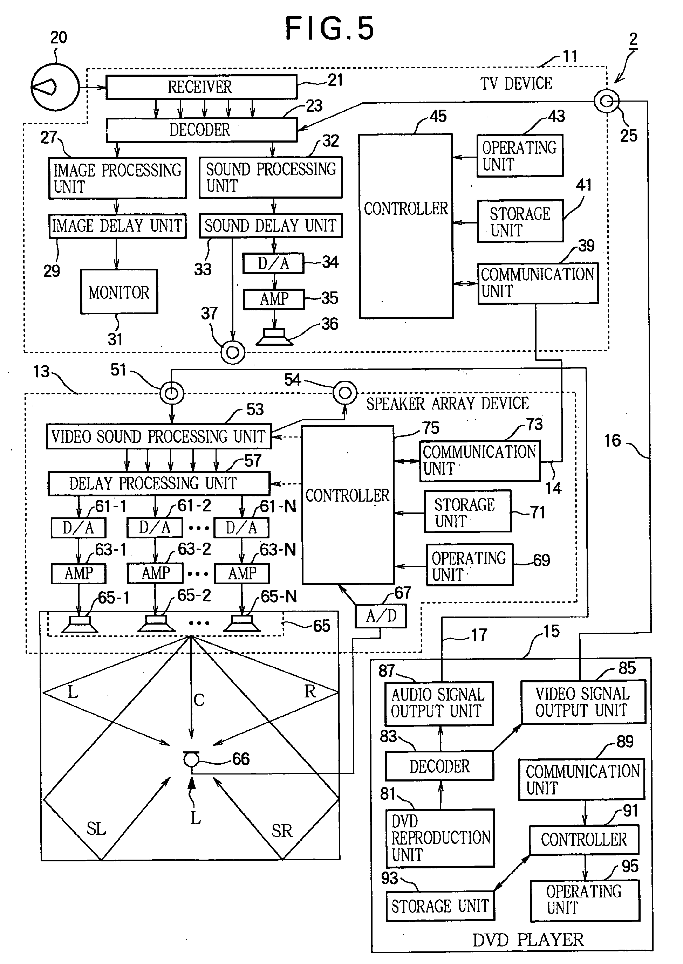

A description will now be given of an AV system 2 associated with a second embodiment of the invention. FIG. 5 is a block diagram illustrating a schematic configuration of the AV system associated with the second embodiment of the invention.

The AV system 2 includes a television device 11, a speaker array device 13, and a DVD player (source device) 15.

A detailed description of the television device 11 and the speaker array device 13 is omitted since they have the same configurations as those of FIG. 1. The AV system 2 associated with the second embodiment is different from that of the first embodiment in that content is transmitted from the DVD player 15 to the television device 11 and the speaker array device 13.

The DVD player 15 includes a DVD reproduction unit 81, a decoder 83, a video signal output unit 85, an audio signal output unit 87, a communication unit 89, a controller 91, a storage unit 93, and an operating unit 95.

The DVD reproduction unit 81 reads an information signal of content stored in a DVD and outputs the information signal to the decoder 83.

The decoder 83 decodes the information signal of the content to extract a video signal and an audio signal. The decoder 83 outputs the video signal to the video signal output unit 85 and outputs the audio signal to the audio signal output unit 87.

The video signal output unit 85 is an interface that outputs the video signal provided from the decoder 83 from the DVD player 15.

The audio signal output unit 87 is an interface that outputs the audio signal provided from the decoder 83 from the DVD player 15.

The communication unit 89 can transmit and receive control information to and from another device.

The controller 91 controls each element of the DVD player 15.

The storage unit 93 stores information such as information of the time required for the DVD player 15 to perform image processing.

The operating unit 95 receives an operation that the user has performed on the DVD player 15.

The video signal output unit 85 of the DVD player 15 is connected to the signal input unit 25 of the television device 11 through a cable 16. The audio signal output unit 87 of the DVD player 15 is connected to the signal input unit 51 of the speaker array device 13 through a cable 17. The communication unit 39 of the television device 11 is connected to the communication unit 73 of the speaker array device 13 through a cable 14.

In the AV system 2 shown in FIG. 5, a video signal of content of a DVD reproduced by the DVD player 15 is output to the television device 11 and an audio signal of the content is output to the speaker array device 13. The communication unit 39 of the television device 11 and the communication unit 73 of the speaker array device 13 transmit and receive processing time information of the television device 11 and processing time information of the speaker array device 13 through the cable 14. When (the processing time of the video signal) > (the processing time of the audio signal), the speaker array device 13 calculates the difference between the processing times of the two signals and delays the timing of output of the video signal by a time corresponding to the difference. Through this procedure, it is possible to prevent the occurrence of a lack of lip-sync even when content is reproduced through the DVD player 15.

Although two main lip-sync methods have been described in the first and second embodiments, the two methods may be appropriately switched when used for an actual system. Specifically, the method of the second embodiment may be used to achieve lip-sync when the speaker array device 13 receives content from a source device and the method of the first embodiment may be used to achieve lip-sync when the speaker array device 13 receives content from a device other than the source device such as a TV device.

In the AV system associated with the second embodiment of the invention, the television device 11 and the speaker array device 13 may not only be set to be in an equivalent relationship but may also be set to be in a master-slave relationship. Specifically, the following procedure is performed in the AV system 2 shown in FIG. 5 when the television device 11 is set as a master and the speaker array device 13 is set as a slave. First, the controller 45 of the television device 11 reads processing time information of an audio signal recorded in the storage unit 71 of the speaker array device 13. The controller 45 then reads processing time information of a video signal from the storage unit 41. The controller 45 then calculates the difference between the processing times of the two signals. When (the processing time of the video signal) > (the processing time of the audio signal), the controller 45 instructs the speaker array device 13 to delay the timing of output of the audio signal by a time corresponding to the difference.

When (the processing time of the video signal) < (the processing time of the audio signal), the controller 45 calculates the difference between the processing times of the two signals and causes the image delay unit 29 to delay the timing of output of the video signal by a time corresponding to the difference. The AV system 2 shown in FIG. 5 may be set to perform a procedure in which the processes of the television device 11 and the speaker array device 13 are exchanged in the above procedure when the speaker array device 13 is set as a master and the television device 11 is set as a slave.

### [Third Embodiment]

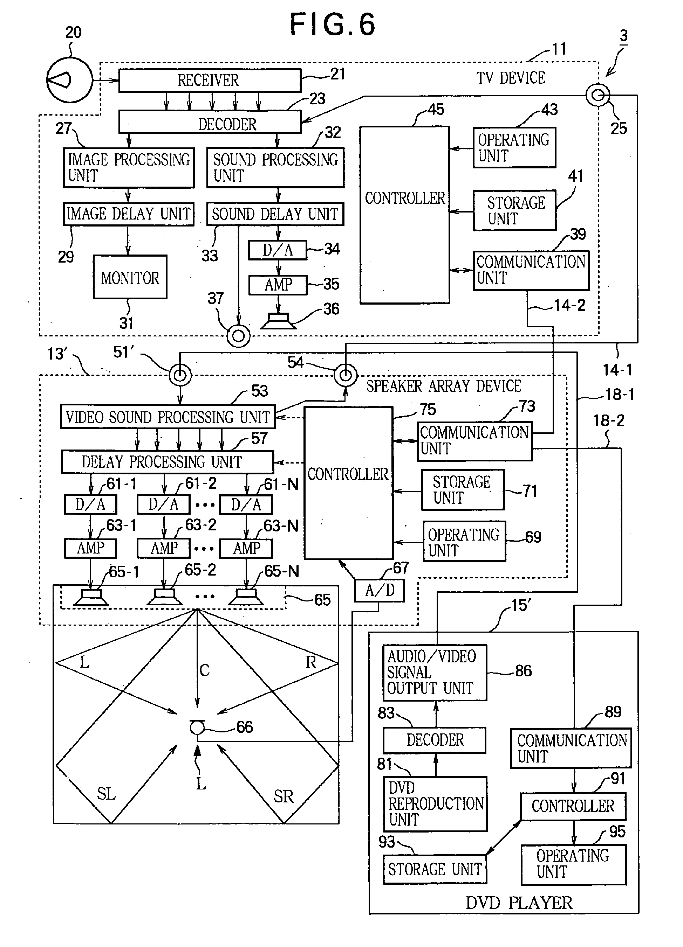

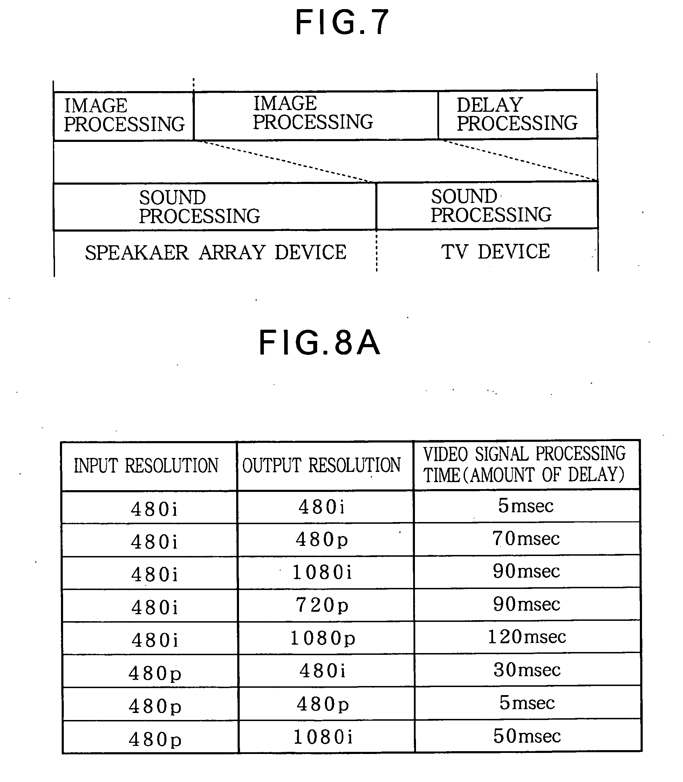

FIG. 6 is a block diagram illustrating a schematic configuration of an AV system associated with a third embodiment of the invention. FIG. 7 is a timing chart of image processing and sound processing in the AV system. The AV system 3 associated with the third embodiment of the invention is different from those of the first and second embodiments in that content is transmitted from a DVD player 15' to a television device 11 through a speaker array device 13'.

In the AV system 3 shown in FIG. 3, the television device 11 has the same configuration as shown in FIGS. 1 and 5. The speaker array device 13' is only partially different from the speaker array device 13 shown in FIG. 5. The DVD player 15' is also only partially different from the DVD player 15 shown in FIG. 5. Thus, the following description will be given of only the different features of the elements of each device.

The speaker array device 13' is configured by replacing the signal input unit 51 in the speaker array device 13 with a signal input unit 51'. While only the audio signal is input to the signal input unit 51 in the speaker array device 13 shown in FIGS. 1 and 5, both the image and audio signals are input to the signal input unit 51' shown in FIG. 6.

The DVD player 15' is configured by replacing the video signal output unit 85 and the audio signal output unit 87 in the DVD player 15 with a audio/video signal output unit 86. The audio/video signal output unit 86 is an interface that outputs sound and video signals provided from the decoder 83 from the DVD player 15'.

In the AV system 3, the audio/video signal output unit 86 of the DVD player 15', which is a source device, is connected to the signal input unit 51' of the speaker array device 13', which is a repeater device, through a cable 18-1. A communication unit 89 of the DVD player 15' is connected to a communication unit 73 of the speaker array device 13' through a cable 18-2.

A signal output unit 54 of the speaker array device 13', which is a repeater device, is connected to a signal input unit 25 of the television device 11, which is a sink device, through a cable 14-1. The communication unit 73 of the speaker array device 13' is connected to a communication unit 39 of the television device 11 through a cable 14-2.

Thus, the AV system 3 is configured such that a source device, one or more repeater devices, and a sink device are connected in series and each device outputs a signal to a downstream device.

Not only the AV amplifier or the speaker array device but also a signal switching device may be used as the repeater device.

Although the cable 14-1 and the cable 14-2 are illustrated separately, the two cables are actually a single HDMI^{™} cable 14 and the cable 18-1 and the cable 18-2 are also a single HDMI^{™} cable 18.

In order to achieve lip-sync in the AV system 3 configured as shown in FIG. 6, each device may report the processing time of a video signal and the processing time of an audio signal in the device or the difference between the processing times of the two signals to another connected device.

For example, let us discuss the case where an image of the content reproduced by the DVD player 15' is displayed by the television device 11 and acoustic effects are imparted to a sound of the content in the speaker array device 13' and the sound is then emitted through the speaker of the television device 11. In this case, in the speaker array device 13', acoustic effects are imparted to the audio signal and no process requiring time is performed on the video signal as shown in FIG. 7. Therefore, in the speaker array device 13', the processing time of the audio signal is longer than the processing time of the video signal. On the other hand, in the television device 11, no process requiring time is performed on the audio signal while video signal processing is performed to display the image on the monitor. Therefore, in the television device 11, the processing time of the video signal is longer than the processing time of the audio signal. In this example, the processing time of the audio signal is longer than the processing time of the video signal in the entirety of the AV system 3. Thus, in the AV system 3, one of the component devices of the AV system 3 serves as a master and performs communication with other connected devices through a communication unit and acquires, from each connected device, the processing time of the video signal and the processing time of the audio signal in the device or the difference between the processing times of the two signals. In addition, a controller in the master device calculates the difference between the entire video signal processing time and the entire audio signal processing time of the AV system 3. Further, in order to prevent the occurrence of a lack of lip-sync based on the processing time difference information, the AV system 3 may be configured such that one device performs delay processing of the video signal or the audio signal according to the capacity of a buffer memory for delay processing of each device.

Accordingly, it is possible to reduce the capacity of a buffer memory required for delay processing in each device. That is, the difference between the processing times of image and audio signals of each device is very great as shown in FIG. 7. Therefore, the buffer memory capacity of the entire system is significant in the case where a buffer memory with capacity required to enable adjustment for eliminating the difference is installed in each device as in the conventional television device. However, in the invention, the difference between the processing times of image and audio signals in the entirety of the AV system 3 is obtained and one device collectively performs delay processing. Therefore, it is possible to reduce the entire buffer memory capacity of the system. That is, it is possible to perform adjustment for eliminating the difference of the entire system even though the capacity of a buffer memory installed in each device is reduced.

Next, let us discuss the case where an image of the content reproduced by the DVD player 15', which is source device, is displayed by the television device 11 and acoustic effects are imparted to a sound of the content and the sound is then emitted through the speaker array 65 of the speaker array device 13'. In this case, information of the difference between the processing time of the video signal and the processing time of the audio signal in the television device 11 is reported to the speaker array device 13' although the television device 11 does not emit a sound corresponding to the audio signal.

In the case where the AV system 3 is configured as described above, i.e., where the image display device that is finally used for watching and the audio reproduction device are different, the AV system 3 is set to ignore the amount of delay of one of the devices subsequent to (i.e., downstream of) a device that outputs the signal early. For example, the amount of sound delay of the television device 11 is ignored and assumed to be 0 seconds when the speaker array device 13' emits the sound and the television device 11 displays the image in the case where the AV system 3 is configured such that signals flow through the devices in the order of the DVD player 15' (source device) -> the speaker array device 13' (repeater device) -> the television device 11 (sink device) as described above.

Next, the AV system 3 shown in FIG. 6 may also be configured such that each device notifies the master device of information of the maximum time (i.e., the maximum amount of delay or the buffer memory capacity), by which the device can delay the video signal and the audio signal, through a communication unit and, based on this information, the master device notifies each device of the amount of delay allocated to the device through a communication unit.

When the AV system 3 is configured in this manner, one device, which is set as a master, can divide the entire signal delay of the AV system 3 among the devices according to the capacity of the buffer memory of each device since it is possible to determine a delay time, by which each device can perform delay processing. By considering the difference between the times required to process the image and audio signals in terms of the entirety of the AV system in such a manner, it is possible not only to reduce the difference but also to distribute the difference to the devices, thereby reducing the required capacity of a buffer memory in each device.

Although the AV system illustrated in FIG. 6 is configured such that the devices are connected in series in the order of the DVD player 15' (source device) -> the speaker array device 13' (repeater device) -> the television device 11 (sink device), the AV system may have a different configuration, without being limited to this configuration. For example, in the AV system 1 shown in FIG. 1, a source device such as a DVD player or a video reproduction device may be connected to the signal input unit 25 of the television device 11. In this case, the television device 11 serves as a repeater device and the speaker array device 13 serves as a sink device.

In the AV system 3 illustrated in FIG. 6, a switching device (selector) may be connected to the signal input unit 51 and a plurality of source devices may be connected to the switching device. For example, the plurality of source devices preferably includes a DVD player, a disc game console, and a hard disc recorder. When the devices are connected in this manner, two repeater devices are connected between the source device and the sink device.

In each of the above embodiments, the time required to process the video signal or the audio signal or the difference between the processing times of the two signals varies according to image or sound settings such as the resolution of the image displayed on the monitor 31 of the television device 11 or the mode of sound field processing.

For example, the processing time of the video signal varies according to the image correction processing, such as contour emphasis, scaling, progressive conversion (IP conversion), game mode, image resolution, or the like. The processing time of the audio signal varies according to the length of the path of the sound beam, the sound beam mode, the DSP mode, the (compressed or uncompressed) sound format, or the like.

In the case where the speaker array device 13' outputs sound beams of 5 channels, the path length of the center channel is short since the sound beam of the center channel arrives directly at the listening position L as described above. On the other hand, the path lengths of the rear channels SLch and SRch are long since the sound beams of the rear channels arrive at the listening position L after being reflected at walls of the room twice. In addition, since the path length also varies according to the size of the room in which the speaker array device 13' is installed, there is a need to store the amount of delay (such as the processing time of the audio signal) according to the size of the room or to calculate and store the amount of delay (such as the processing time of the audio signal) in the storage unit when the device is installed.

Accordingly, the invention stores the processing time of the video signal or the audio signal according to an image or sound setting (mode) selected by the user.

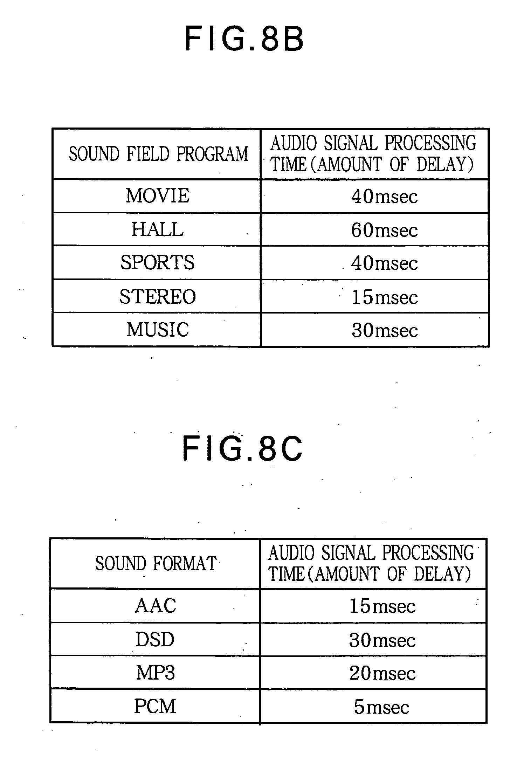

The television device 11 or the speaker array device 13' stores the processing time (i.e., the amount of delay) of the video signal or the audio signal according to the resolution of image, the mode of sound field processing, or the like in a table format as shown in FIG. 8 in the storage unit.

FIG. 8 illustrates a table for managing the processing time of the video signal or the audio signal according to image resolution, sound field processing mode, or the like. The processing time (i.e., the amount of delay) shown in FIG. 8 is an example illustrated for ease of explanation.

For example, as shown in FIG. 8A, the processing time (i.e., the amount of delay) of the video signal in the television device 11 is 5msec in the case where the input resolution is 480i and the output resolution is 480i. On the other hand, the processing time (i.e., the amount of delay) of the video signal is 90msec when the input resolution is 480i and the output resolution is 1080i.

In addition, as shown in FIG. 8B, the processing time (i.e., the amount of delay) of the audio signal in the speaker array device 13' is 40msec when acoustic effects of a sports mode are selected as acoustic effects imparted to the audio signal. The processing time (i.e., the amount of delay) of the audio signal is 60msec when acoustic effects of a concert hall mode are selected.

Further, as shown in FIG. 8C, the processing time (i.e., the amount of delay) of the audio signal is 15msec when the format of the audio signal is AAC and the processing time (i.e., the amount of delay) of the audio signal is 20msec when the format of the audio signal is MP3.

The video signal processing time varies according to the image resolution and the audio signal processing time varies according to the sound field program or the sound format as described above. Accordingly, there is a need to change the amount of delay according to the selected resolution, sound field program, or the like.

The processing time of the audio signal or the video signal may be managed in the following manner in the case where the processing time of the audio signal or the video signal is managed using a header command of HDMI^{™}. For example, processing time information of the audio signal or the video signal may be stored in EDID. In addition, delay amount information or information indicating that the amount of delay has been changed may be transferred using one of HDMI^{™} Info Frame, HDMI^{™} CEC, or DDC.

The above description has been given of the configuration wherein the processing time (i.e., the amount of delay) of the video signal or the audio signal or the difference between the processing times of the two signals is stored in the storage unit. However, the invention is not limited to this configuration and may employ a different configuration. For example, a test disc, on which test data is recorded so that the image and the sound are simultaneously output, or a test signal generator is used as a source, a light receiving sensor is installed on the TV screen, and a microphone for sound reception (i.e., the microphone 66) is installed at the listening position of the user. Then, the amounts of delay of the two signals or the difference between the amounts of delay is measured using the timings of change (or trigger) of the two signals and the above setting is then performed based on the measurement.

In addition, although the above description has been given with reference to the example where the speaker array device is used, the invention is not limited to this example and one or more speakers connected to an AV amplifier may, of course, be used instead of the speaker array device.

### [Fourth Embodiment]

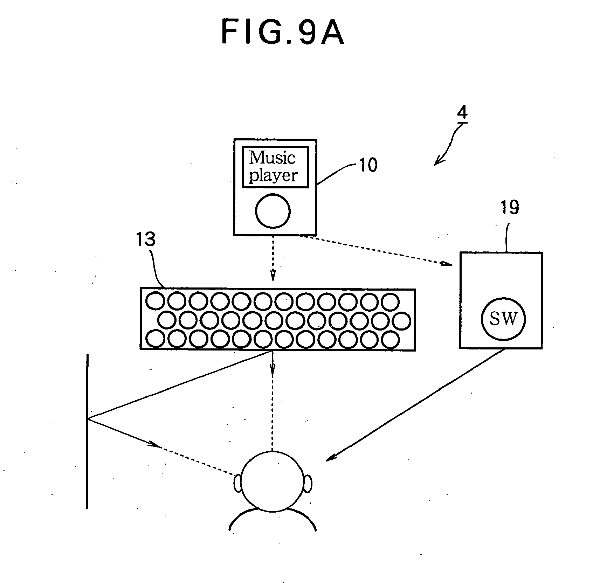

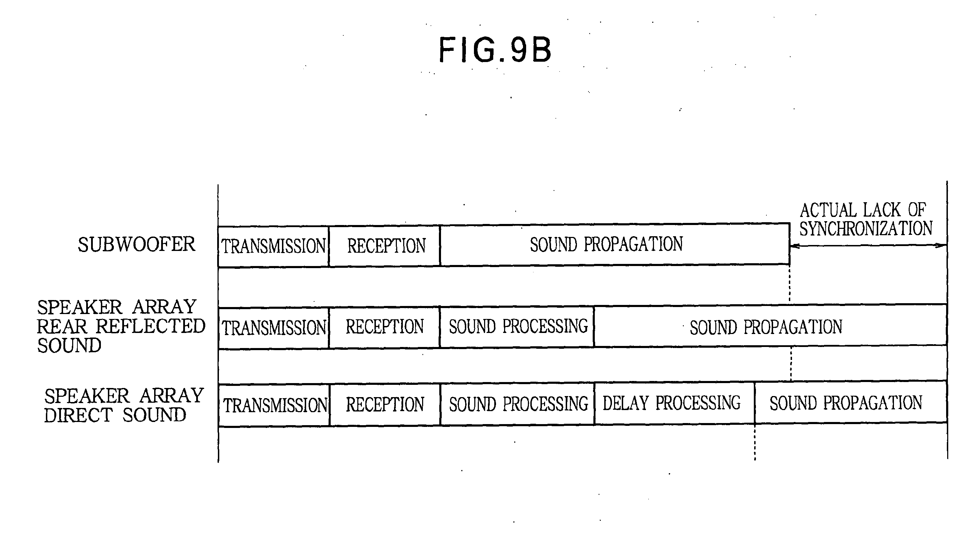

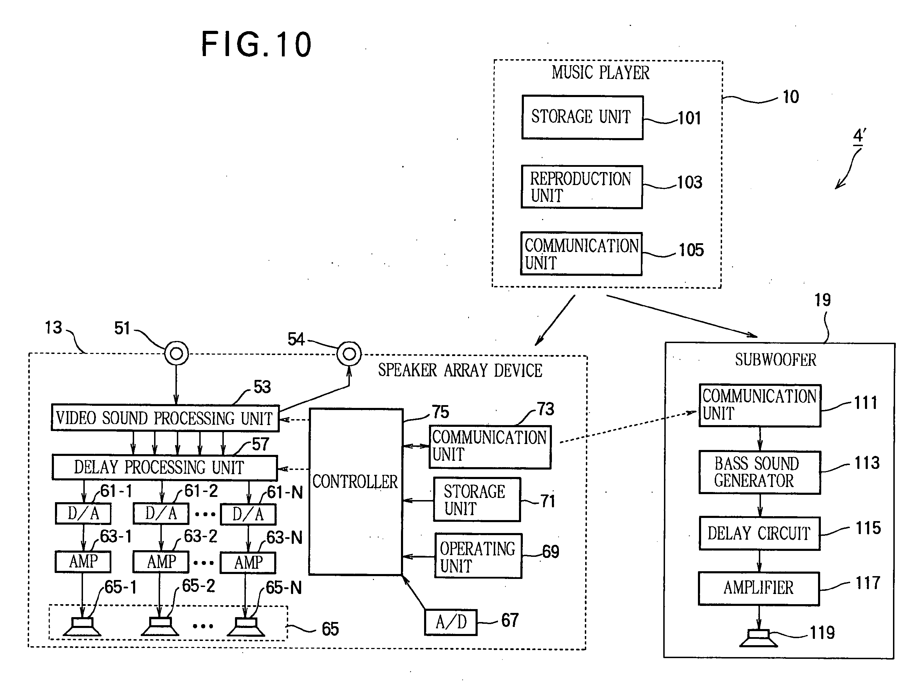

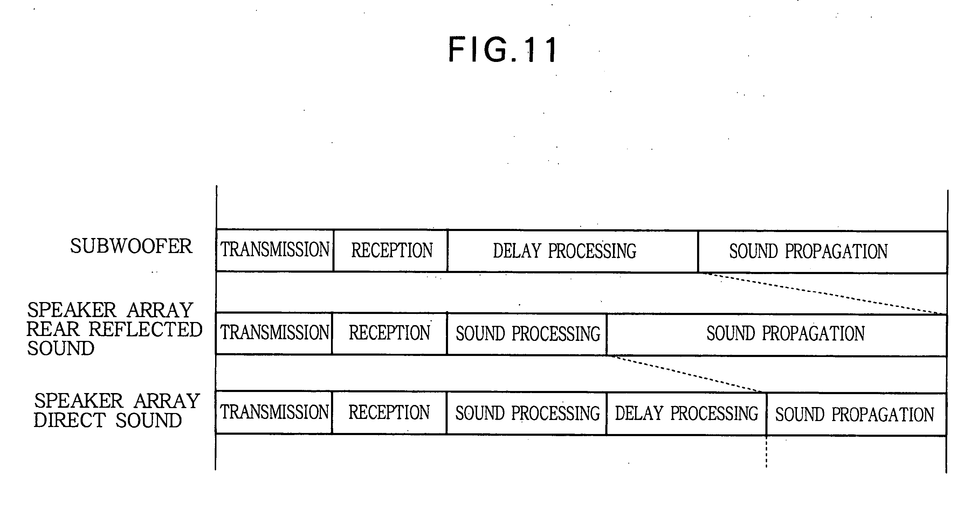

The following is a description of an AV system associated with a fourth embodiment of the invention. While processing for eliminating the lack of synchronization between the image and the sound has been described in the first to third embodiments, processing for eliminating the lack of synchronization between a plurality of AV devices when the AV devices output sounds of the same content is described in the following. FIG. 9 illustrates a schematic configuration of a conventional AV system and a relation between processing times. FIG. 10 is a block diagram illustrating a schematic configuration of an AV system associated with the fourth embodiment of the invention. FIG. 11 illustrates a relation between processing times in the AV system associated with the fourth embodiment of the invention.

The AV system 4 shown in FIG. 9A includes a music player 10, which is an audio reproduction device (i.e., a source device), a speaker array device 13, which is a first AV device, and a subwoofer 19, which is a second AV device. The music player 10 broadcasts an audio signal of the content to the speaker array device 13 and the subwoofer 19. Each of the speaker array device 13 and the subwoofer 19 reproduces a sound of the content.

The conventional AV system 4 does not have a configuration in which information of a time required to reproduce the content is transmitted from the speaker array device 13 to the subwoofer 19 or a configuration wherein the subwoofer 19 delays the sound. The time required for the subwoofer 19 to perform audio reproduction processing is short (or small), compared to that of the speaker array device 13, and the subwoofer 19 does not perform a process requiring time such as DSP processing. In addition, the sound processing time of the speaker array device 13 is significantly longer than that of the subwoofer 19 since sound beams output from the speaker array device 13 propagate to (or arrive at) the listening position of the listener at the same time directly or after being reflected once or twice depending on the channels as described above. Therefore, bass sounds emitted by the subwoofer 19 arrive at the listening position earlier than sounds (i.e., sound beams) emitted by the speaker array device 13 as shown in FIG. 9B.

An AV system 4', which is an improvement of the AV system 4, is configured as follows to prevent this problem. Specifically, as shown in FIG. 10, a speaker array device 13 includes a component (i.e., a communication unit 73) that transmits, to a subwoofer 19, information of a time required for reproduction processing of content, i.e., information (reproduction processing time information) such as information of a time that elapses until the sound of the content arrives at the listening position or information of a time required for delay processing of the sound beam. The subwoofer 19 includes a component (i.e., a communication unit 111) that receives reproduction processing time information transmitted by the speaker array device 13 and a delay circuit that delays a sound emitted from the speaker based on the reproduction processing time information received from the speaker array device 13.

By employing this configuration, the AV system 4' can delay a sound emitted from the subwoofer 19 so that the sound emitted from the subwoofer 19 and a sound beam emitted from the speaker array device 13 which is an AV device having a latest reproduction timing as shown in FIG. 11 are synchronized with each other, i.e., simultaneously arrive at the listening position. Accordingly, the AV system 4' can emit surround sound without causing the listener to feel uncomfortable.

In addition, in the AV system 4', it is already known that the reproduction processing time required for the subwoofer 19 is always shorter than that of the speaker array device 13. In this case, the subwoofer 19, which is an AV device requiring a short time for reproduction processing, only needs to have a configuration for receiving information indicating delay of reproduction of content from the speaker array device 13 which is another AV device and then delaying the reproduction of the content. This eliminates the need to adjust content reproduction timing with that of another AV device, thereby simplifying the configuration.

On the other hand, in the case where it is not possible to specify an AV device requiring a short time for reproduction processing among a plurality of AV devices, reproduction processing time information is transmitted and received between the AV devices and an AV device requiring a short time for reproduction processing is determined based on the information during initial setting. Then, the AV device requiring a short time for reproduction processing is configured so as to receive reproduction processing time information from other AV devices and to delay reproduction of content based on the received information.

A detailed configuration of each device of the AV system 4' is shown in FIG. 10. The music player 10 includes a storage unit 101, a reproduction unit 103, and a communication unit 105. The speaker array device 13 has the same configuration as shown in FIG. 1. The subwoofer 19 includes a communication unit 111, a bass sound generator 113, a delay circuit 115, an amplifier 117, and a speaker 119.

In the music player 10, the reproduction unit 103 reads and reproduces data (sound data of two channels) of content from the storage unit 101. The communication unit 105 superimposes the reproduced audio signal on a radio wave and transmits the resulting signal through broadcasting. In the speaker array device 13, when the communication unit 73 receives audio signals of two channels broadcast by the music player 10, the video sound processing unit 53 performs sound processing (specifically, DSP processing) for expanding the audio signals of the two channels to audio signals of five channels (i.e., surround audio signals). In addition, the delay processing unit 57 performs delay processing on audio signals of other channels in accordance with a channel which arrives at the listening position last. Here, the speaker array device 13 transmits reproduction processing time information to the subwoofer 19 through the communication unit 73.

The speaker array device 13 generates respective sound beams of the channels by performing, through the delay processing unit 57, predetermined delay processing based on reproduction processing time information so that the sound beams of the channels propagate to positions around the listening position and then outputs the sound beams through the speaker array 65.

In the subwoofer 19, when the communication unit 111 receives audio signals of two channels broadcast by the music player 10, the bass sound generator 113 adds the audio signals of the two channels to extract only a bass signal. Then, the delay circuit 115 delays the bass signal based on the reproduction processing time information transmitted from the speaker array device 13, the amplifier 117 amplifies the delayed bass signal, and the speaker 119 then outputs the amplified bass signal.

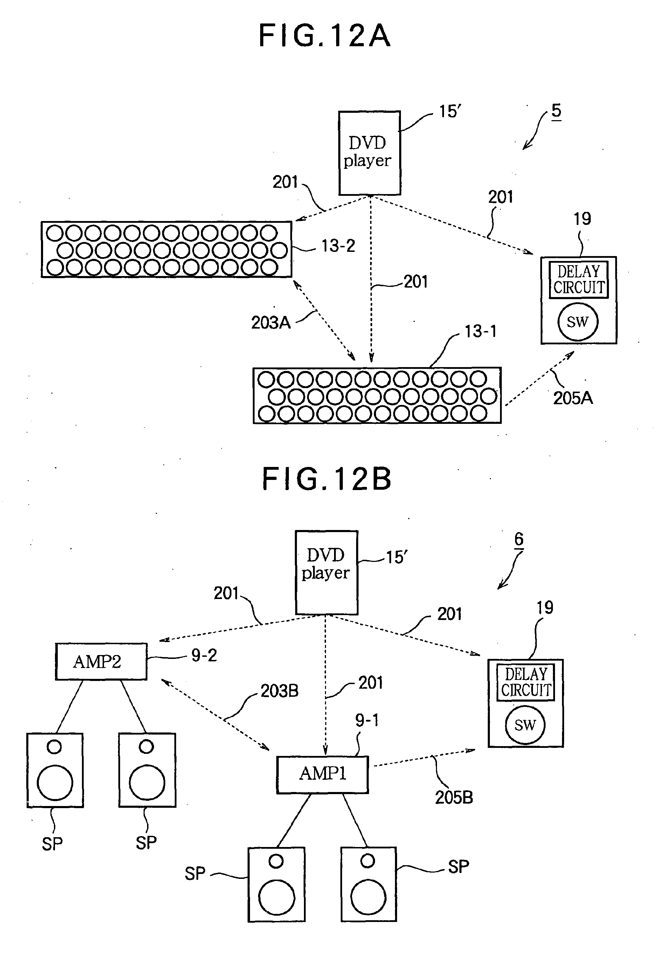

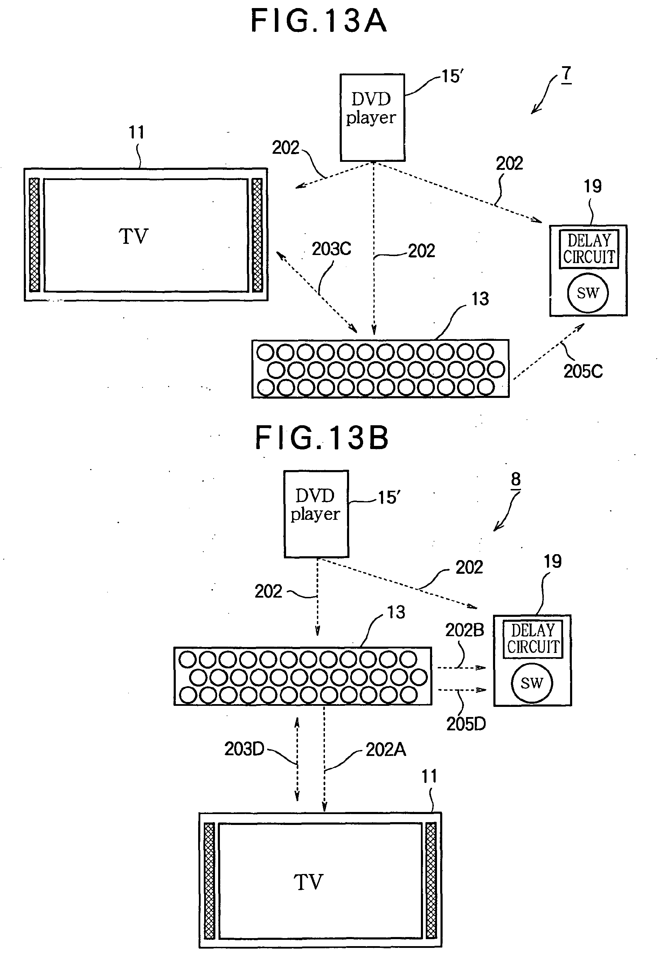

The invention may also provide audio systems configured as described below. FIGS. 12 and 13 are conceptual diagrams illustrating other AV system configurations according to the invention.

As shown in FIG. 12A, an AV system 5 includes a DVD player 15', which is a source device, a speaker array device 13-1, a speaker array device 13-2, and a subwoofer 19. Descriptions of the configurations of the devices shown in FIGS. 12 and 13 are omitted since they are mostly the same as those shown in FIGS. 1, 5, 6, and 10. Here, it is assumed that each device shown in FIGS. 12 and 13 includes a communication unit that transmits and receives an audio signal or reproduction processing time information through broadcasting.

The DVD player 15' broadcasts audio signals 201 of 7.1 channels to the speaker array device 13-1, the speaker array device 13-2, and the subwoofer 19. Sound beams of 7 channels are generated through the two speaker array devices 13-1 and 13-2. For example, the speaker array device 13-1 is configured to generate sound beams of Cch, Lch, and Rch and the speaker array device 13-2 is configured to generate sound beams of SLch, SRch, BLch, and BRch. The speaker array device 13-1 and the speaker array device 13-2 transmit and receive their own reproduction processing time information 203A to and from each other and perform delay processing on other sound beams in accordance with a sound beam that arrives at the listening position last. One of the speaker array device 13-1 and the speaker array device 13-2 serves as a master and transmits reproduction processing time information 205A to the subwoofer 19. In the example of FIG. 12A, the speaker array device 13-1 transmits the reproduction processing time information 205A. When this configuration is employed, it is possible to adjust and set the timing of emission of a sound from each device so that the sound of each channel simultaneously arrives at the listening position, as when the configuration shown in FIG. 10 is employed.

Further, the speaker array devices may be replaced with AV amplifier devices as shown in FIG. 12B. In this case, as when the configuration of 12A is employed, the AV amplifier devices may transmit and receive their own reproduction processing time information 203B or reproduction processing time information 205B to and from each other and perform delay processing on other sound beams in accordance with a sound beam that arrives at the listening position last.

The AV system may also be configured such that a plurality of audio reproduction devices and a video reproduction device transmit and receive delay processing information as shown in FIG. 13A. The AV system 7 shown in FIG. 13A includes a subwoofer 19 in addition to the components of the AV system 2 described above. In this case, the devices also transmit and receive their own reproduction processing time information 203C or reproduction processing time information 205C to and from each other, perform delay processing on other sound beams in accordance with a sound beam that arrives at the listening position last, and a television device 11 displays the image at the timing of arrival of the sound at the listening position. This allows the user who is located at the listening position to feel that video and audio are synchronized (i.e., lip-synced) with each other.

In addition, as shown in FIG. 13B, when the AV system is configured such that image and sound content is transmitted from a source device to a television device via a speaker array device, the subwoofer 19 may be configured so as to switch the delay time (i.e., the amount of delay) according to a signal 202B from the speaker array device 13 (i.e., a repeat signal received via another AV device) or a signal 202 that is transmitted from the source device (i.e., the DVD player 15) through broadcasting (i.e., a signal received directly from the source device). In this case, the speaker array device 13 determines a device, from which the subwoofer 19 is set to receive signals, and transmits corresponding reproduction processing time information 205D to the subwoofer 19. Similar to the case of FIG. 13A, the television device 11 displays the image at the timing of arrival of the sound at the listening position. Accordingly, video and audio are synchronized in the entirety of the system, thereby allowing the user who is located at the listening position to feel that video and audio are synchronized (i.e., lip-synced) with each other.

The AV system may also be configured such that the controller 75 of the speaker array device 13, which corresponds to a sound emission control unit, outputs a sound emission start (i.e., mute release) and sound emission termination (i.e., mute) command to the subwoofer 19, which is an AV device requiring a short time for reproduction processing, to control the timing of start of sound emission and the subwoofer 19 switches operations according to this signal.

Since the speaker array device 13 performs DSP processing or delay processing as described above, the time that elapses until it emits a sound is longer than that of the subwoofer 19. Especially, the activation time that elapses until the speaker array device 13 emits a sound after power is turned on is longer than that of the subwoofer 19 and the subwoofer 19 is activated before the speaker array device 13 transmits reproduction processing time information to the subwoofer 19. Therefore, the subwoofer 19 alone previously emits a bass sound. Accordingly, the speaker array device 13 outputs a sound emission start (i.e., mute release) and sound emission termination (i.e., mute) command to the subwoofer 19 and the subwoofer 19 switches operations according to this signal.

The AV system may also be configured such that the speaker array device 13 outputs a volume setting command to the subwoofer 19 and the subwoofer 19 switches operations according to this signal. In this case, the subwoofer 19 determines that the volume setting command indicates mute release.

This configuration prevents the subwoofer 19 from previously emitting a bass sound, thereby allowing the speaker array device 13 and the subwoofer 19 to simultaneously emit sounds.

## Claims

1. An AV system in which content is input and output, comprising:
a plurality of AV devices that process a signal of the content to reproduce the content; and
a source device that broadcasts the content to at least one of the AV devices,
wherein the AV device comprises:
a reproduction unit that receives the content broadcast by the source device and performs reproduction processing on the received content;
a communication unit that communicates reproduction processing time information with another AV device, the reproduction processing time information indicating a time required for the reproduction processing of the content; and
a delay unit that delays a time to reproduce the content, such that the delay unit delays reproduction of the content in accordance with an AV device having a latest reproduction timing based on the reproduction processing time information.

2. The AV system according to claim 1, wherein the communication unit of one AV device transmits information instructing delay of reproduction of the content based on the reproduction processing time information to another AV device requiring a time for reproduction processing shorter than a time required for reproduction processing by the one AV device.

3. The AV system according to claim 1 or 2, wherein at least one of the AV devices comprises:
a speaker array that comprises a plurality of speakers; and
a beam control unit that distributes audio signals of the content to the plurality of the speakers of the speaker array for emission of sounds in beam forms which constitute sound channels and that adjusts sound emission timing of each sound channel to allow the plurality of the sounds to simultaneously arrive at a listening position,
wherein the time required for reproduction processing by the AV device includes a time required for the sound to arrive at the listening position.

4. The AV system according to any one of claims 1 to 3, wherein the delay unit changes an amount of delay of the reproduction of the content according to whether the content has been received from the source device directly or via another AV device.

5. An AV system in which content is input and output, comprising a plurality of AV devices that process a signal of the content to reproduce the content, the AV devices including a video reproduction device for reproducing an image contained in the content, and an audio reproduction device for reproducing a sound contained in the content,
wherein the video reproduction device comprises: a first communication unit that transmits and receives information regarding reproduction timing of the content; a display unit that reproduces the image of the content and a delay unit that delays an audio signal of the content in accordance with the reproduction timing of the image and outputs the delayed audio signal to another AV device,
wherein the audio reproduction device comprises: a second communication unit that transmits and receives information regarding reproduction timing of the content; and a sound emission unit that reproduces the audio signal of the content output by the video reproduction device,
wherein the second communication unit transmits a sound processing time required for sound processing of the content, as the information regarding reproduction timing of content, to the video reproduction device, and
wherein the delay unit of the video reproduction device reduces a delay time of the audio signal based on information of the sound processing time received from the audio reproduction device.

6. The AV system according to claim 5, wherein the video reproduction device includes an image processing unit that performs processing of a video signal of the content and a first sound processing unit that performs processing of the audio signal of the content,
the audio reproduction device includes a second sound processing unit that performs processing of the audio signal of the content, and
the delay unit of the video reproduction device delays reproduction timing of the image by a difference between a sum of the sound processing times required for the first and second sound processing units to perform processing of the audio signal and an image processing time required for the image processing unit to perform processing of the video signal when the sum of the sound processing times is longer than the image processing time.

7. The AV system according to claim 6, wherein the audio reproduction device includes:
a speaker array that comprises a plurality of speakers; and
a beam control unit that distributes audio signals of the content to the plurality of the speakers of the speaker array for emission of sounds in beam forms which constitute sound channels and that adjusts sound emission timing of each sound channel to allow the plurality of the sounds to simultaneously arrive at a listening position,
wherein the sound processing time of the second sound processing unit of the audio reproduction device includes a time required for the sound to arrive at the listening position.

8. The AV system according to claim 7, wherein the beam control unit of the audio reproduction device has a plurality of beam modes selectable for changing positions at which the plurality of the sounds each having the beam form are reflected from walls enclosing the receiving point and changes the sound processing time according to a beam mode selected in the audio reproduction device.
